# EUROPÄISCHE PATENTSCHRIFT

(11) **EP 3 118 023 B1**
(45) Veröffentlichungstag und Bekanntmachung des Hinweises auf die Patenterteilung: **18.04.2018**
(21) Anmeldenummer: 16154775.7
(22) Anmeldetag: 09.02.2016
(51) Int. Cl.: B60C 11/01, B60C 13/00, B60C 15/00, B29D 30/06, B60C 15/06

(54) **FAHRZEUGLUFTREIFEN**
PNEUMATIC TYRE FOR A VEHICLE
PNEUMATIQUE DE VÉHICULE

(30) Priorität: 16.07.2015 DE 102015213401
(43) Veröffentlichungstag der Anmeldung: 18.01.2017
(73) Patentinhaber: Continental Reifen Deutschland GmbH, 30165 Hannover (DE)
(72) Erfinder: Habicht, Stefan, 30449 Hannover (DE); Holste, Werner, 30539 Hannover (DE)
(74) Vertreter: Widjaja, Wira

(56) Entgegenhaltungen:
- EP-A1- 2 657 049
- EP-A1- 2 805 837

## Beschreibung

Die Erfindung betrifft einen Fahrzeugluftreifen, welcher in einer Vulkanisationsform mit einem Segmentring und zwei Seitenwandschalen vulkanisiert worden ist, deren Formgrenzen an oder in den Schulterbereichen sichtbare Grenzstellen hinterlassen, und welcher einen Laufstreifen, Seitenwandprofile, einen mehrlagigen Gürtelverband, eine Radialkarkasse, welche Wulstkerne in Wulstbereichen von axial innen nach axial außen umläuft, und ferner je ein Hornprofil in jedem Wulstbereich aufweist, welches außenseitig von einem radial inneren, Richtung Wulstkern verjüngend auslaufenden Endabschnitt des Seitenwandprofils überlappt ist, wobei in jedem Schulterbereich je ein Wingprofil verläuft, welches einen radial äußeren, Richtung Laufstreifen verjüngend auslaufenden Endabschnitt des Seitenwandprofils von außen überlappt.
Es ist üblich, in den Schulterbereichen von Fahrzeugluftreifen, insbesondere von Reifen für Personenkraftwagen, sogenannte Wingprofile vorzusehen, die gemeinsam mit dem Laufstreifen koextrudiert werden, üblicherweise im Querschnitt im Wesentlichen dreieckig sind und aus der Gummimischung der Seitenwandprofile bestehen. Bei den bekannten Konstruktionen erstrecken sich die Wingprofile soweit in die Seitenwandbereiche hinein, dass die Formsegmentteilung zwischen den bei den üblichen Reifenheizformen vorhandenen Seitenwandschalen und dem Segmentring zum Ausformen des Laufstreifens über die Wingprofile verläuft. Dadurch kann es zu Materialverschiebungen zwischen den überlappenden Bereichen beim Vulkanisationsprozess kommen, wodurch die Qualität der Reifen leidet. Aus prozesstechnischen Gründen ist es ferner nicht möglich, die Seitenwandprofile wie gewünscht dünn auszuführen, ihre Dicke beträgt im geheizten, fertigen Reifen üblicherweise etwa 3 mm. Reifen mit herkömmlichen Wingprofilen sind bekannt aus den Dokumenten EP 2 657 049 A1 und EP 2 805 837 A1.

Der Erfindung liegt die Aufgabe zu Grunde, einen Reifen der eingangs genannten Art derart auszuführen, dass die erwähnte Materialverschiebung verhindert wird und die Dicke der Seitenwandprofile verringert werden kann, um durch ein geringeres Gewicht des Reifens den Rollwiderstand des Reifens zu senken.

Gelöst wird die gestellte Aufgabe erfindungsgemäß dadurch, dass sich die Wingprofile radial außerhalb der von den Formgrenzen zwischen dem Segmentring und den Seitenwandschalen hinterlassenen Grenzstellen befinden.

Ein erfindungsgemäß ausgeführter Fahrzeugluftreifen ist konstruktiv derart gestaltet, dass sich die Wingprofile radial außerhalb der Formtrennung befinden, sodass die Seitenwandprofile bis in die Schulterbereiche des Reifens ragen. Die Wingprofile haben keinen Einfluss mehr auf die Dicke der Seitenwandprofile, sodass die Seitenwandprofile dünner ausgeführt werden können als bei Konstruktionen, bei welchen die Formtrennung über die Wingprofile verläuft. Damit kann der Anteil an Gummi, der beim Einfedern des Reifens Zug- und Druckbelastungen ausgesetzt ist, verringert werden. In dünneren Seitenwänden verringert sich der Energieverlust durch Wärme und der Reifen weist einen geringeren Rollwiderstand auf. Durch die mögliche "Verkleinerung" der Wingprofile werden im Speziellen Zugspannungen in den oberen Schulterbereichen reduziert, was zusätzlich die Haltbarkeit des Fahrzeugluftreifens erhöht. Darüber hinaus ermöglichen dünnere Seitenwände eine geringere radiale Steifigkeit des Reifens. Diese führt zu einer mechanische Entkopplung des Kopfbereiches des Reifens von den Wulstbereichen des Reifens und bewirkt eine Verringerung des Reifengeräusches im Fahrzeuginneren.

Gemäß einer bevorzugten Ausführungsform der Erfindung weist jedes Wingprofil eine an der Reifenaußenseite befindliche Grenze zum Seitenwandprofil auf, welche sich in einem in radialer Richtung ermittelten Abstand von einer Basislinie befindet, welcher zumindest 75 % der ebenfalls von der Basislinie ermittelten Querschnittshöhe des Reifens beträgt, wobei die Basislinie in axialer Richtung verläuft und jene Linie ist, welche an einer der jeweiligen Reifendimension entsprechenden Standardfelge das äußere Ende des Felgenradius berührt. Eine derartige Positionierung der Wingprofile ist zur Erzielung der oben ausgeführten vorteilhaften Effekte besonders günstig.

In diesem Zusammenhang ist eine weitere bevorzugte Ausführung vorgesehen, nämlich, dass sich die Grenze zwischen den Wingprofilen und den Seitenwandprofilen höchsten auf Höhe der seitlichen Randkanten der radial innersten Gürtellage befindet.

Weitere erfindungsgemäße Merkmale sind für einen geringen Rollwiderstand des Fahrzeugluftreifens von besonderem Vorteil. Zu diesen Maßnahmen gehört, dass die Seitenwandprofile zumindest zwischen einer Höhe von 29 % der nominellen Seitenwandhöhe und der erwähnten Grenze die einzigen außenseitig der Radialkarkasse verlaufenden Gummibauteile sind. Eine weitere diesbezüglich vorteilhafte Maßnahme besteht darin, dass die senkrecht zum Verlauf der Radialkarkasse vorliegende Dicke der Seitenwandprofile zwischen der Höhe von 29 % der nominellen Seitenwandhöhe und der erwähnten Grenze 1,0 mm bis 3,5 mm, insbesondere bis zu 2,5 mm, beträgt. Ein optimaler Bereich für die Dicke der Seitenwandprofile liegt von 1,5 mm bis 1,8 mm.

Gemäß einem weiteren bevorzugten Merkmal der Erfindung ist ferner die Dicke der Seitenwandprofile zwischen der Höhe von 29 % der nominellen Seitenwandhöhe und der erwähnten Grenze zumindest im Wesentlichen konstant.

Die erfindungsgemäße Anordnung der Wingprofile ist sowohl bei Fahrzeugluftreifen, deren Radialkarkasse mit ihren um die Wulstkerne umgeschlagenen Abschnitten bis unter den Gürtelverband reichend rückgeführt sind, als auch bei Fahrzeugluftreifen, bei welchen die um die Wulstkerne umgeschlagenen Abschnitte der Radialkarkasse im Bereich der Seitenwände als Hochschläge enden, von Vorteil.

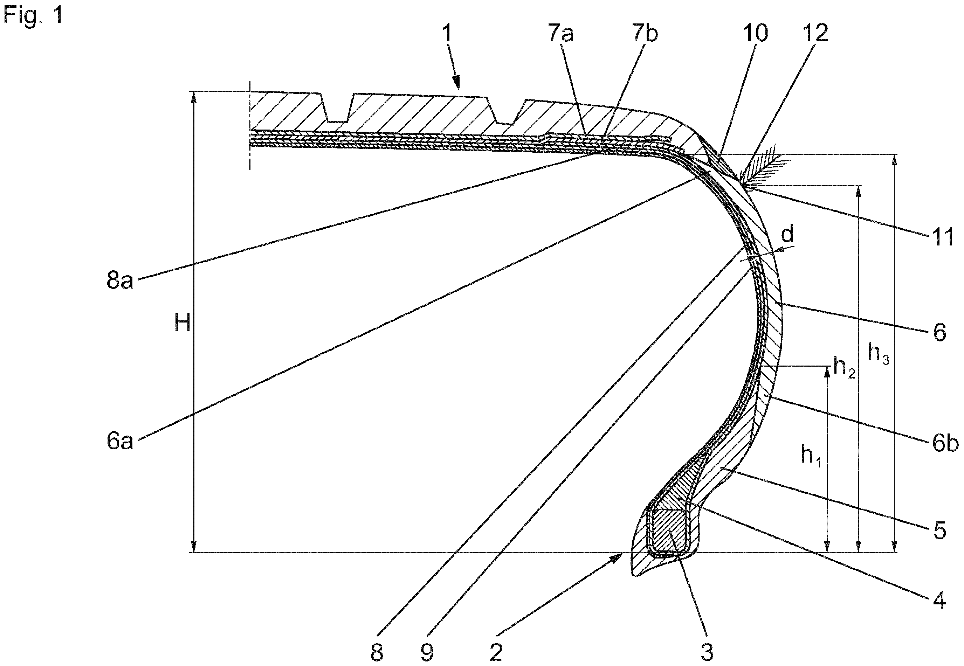

Weitere Merkmale, Vorteile und Einzelheiten der Erfindung werden nun anhand der Zeichnung, die ein Ausführungsbeispiel darstellt, näher beschrieben. Die einzige Zeichnungsfigur, Fig. 1, zeigt einen Querschnitt einer Hälfte eines Fahrzeugluftreifens.

Die in der Beschreibung und den Patentansprüchen angegebenen Größen- und Dimensionsangaben beziehen sich auf einen auf einer Standardfelge montierten Reifen unter Standardinnendruck, jedoch im unbelastenen Zustand, gemäß den E.T.R.T.O.-Standards in der derzeit geltenden Fassung. Die radialen Höhen bzw. Abstände sind von einer Basislinie B_{L} aus ermittelt, welche in axialer Richtung verläuft und die Felge dort schneidet, wo sich das äußere Ende des Felgenradius befindet. Unter der Nennbreite ist die gemäß den E.T.R.T.O.-Standards in den Reifendimensionsangaben enthaltene Nennbreite in Millimeter zu verstehen. So ist beispielsweise in der Reifendimension "235/35R19" die Zahl 235 die Nennbreite in Millimeter, die Zahl 35 steht für das Nennquerschnittsverhältnis. In diesem Beispiel entsprechen daher 35 % der Nennbreite des Reifens der nominellen Seitenwandhöhe, die demnach in diesem Beispiel 82,25 mm beträgt.

Fig. 1 zeigt eine Schnittansicht eines Fahrzeugluftreifens in Radialbauart für Personenkraftwagen. Der Fahrzeugluftreifen weist einen Laufstreifen 1, Wulstbereiche 2 mit Wulstkernen 3 und einem ein - oder mehrteiligen Apex (Kernprofil) 4 und je einem Hornprofil 5 auf, ferner Seitenwandprofile 6, einen Gürtelverband 7, eine Radialkarkasse 8 und eine luftdichte Innenschicht 9. Schulterseitig befindet sich zwischen dem Seitenwandprofil 6 und dem Laufstreifen 1 je ein im Querschnitt im Wesentlichen dreieckiges Wingprofil 10.

Der Apex 4, das Hornprofil 5, das Seitenwandprofil 6 und das Wingprofil 10 sind Gummiprofile, welche aus den für diese Bauteile üblichen Kautschukmischungen hergestellt sind.

Der Laufstreifen 1, welcher nicht Gegenstand der Erfindung ist, kann in bekannter Weise ausgeführt bzw. aufgebaut sein, beispielsweise einschichtig oder zweischichtig mit einer Laufstreifenbase und einer Laufstreifencap. Der Laufstreifen 1 ist ferner in bekannter und nicht gezeigter Weise mit einer Laufstreifenprofilierung versehen und wird gemeinsam mit den beiden Wingprofilen 10 durch Koextrusion hergestellt. Üblicherweise bestehen die Wingprofile 10 aus der gleichen Kautschukmischung wie die Seitenwandprofile 6. Die Wingprofile 10 können jedoch auch aus einer von der Seitenwandmischung abweichenden Mischung hergestellt werden.

Die Radialkarkasse 8 weist in bekannter Weise zumindest eine Lage aus gummierten, insbesondere textilen Korden auf, welche zumindest im Wesentlichen in radialer Richtung verlaufen. Die jeweils von axial innen nach axial außen um die Wulstkerne 3 verlaufende Karkasse 8 reicht bei der gezeigten Ausführung mit ihren umgeschlagenen Abschnitten 8a bis in den Bereich radial innerhalb des Gürtelverbandes 7 zurück. Der Überlappungsbereich zwischen den Abschnitten 8a der Karkasse 8 und dem Gürtelverband 7 beträgt in der Größenordnung von einigen Millimetern bis zu einigen Zentimetern. Bei alternativen Ausführungen können die umgeschlagenen Abschnitte 8a in bekannter Weise als Hochschläge enden.

Der Gürtelverband 7 weist mindestens zwei Gürtellagen 7a, 7b mit zueinander gekreuzt, aber in jeder Lage parallel verlaufenden Festigkeitsträgern, insbesondere Stahlkorden, auf. Die Gürtellagen 7a, 7b können mit einer nicht gezeigten ein-oder mehrlagigen Gürtelbandage bedeckt sein, welche in bekannter Weise aus in Gummi eingebetteten, im Wesentlichen in Umfangsrichtung verlaufenden Bandagenkorden, beispielsweise Nylonkorden, besteht.

Das Hornprofil 5 ist vorzugsweise und wie an sich bekannt mit dem Seitenwandprofil 6 koextrudiert und überlappt daher mit letzterem. Das Hornprofil 5 erstreckt sich in radialer Richtung bis in eine Höhe h₁, ermittelt von der Basislinie B_{L}, die 25 % bis 29 % der nominellen Seitenwandhöhe beträgt, die ebenfalls von der Linie B_{L} aus in radialer Richtung vorliegt.

Der Reifen ist in einer Vulkanisationsform vulkanisiert, welche in an sich bekannter Weise Seitenwandschalen und einen den Laufstreifen ausformenden Segmentring aufweist. Am fertig vulkanisierten Reifen hat daher in den oberen Seitenwandbereichen bzw. den Schulterbereichen, vor allem an der Außenseite, die Formtrennlinie zwischen dem Formsegmentring und der jeweiligen Seitenwandschale sichtbare Grenzstellen 11 hinterlassen, beispielsweise Austriebe und/oder eine im Wesentlichen umlaufende, weitgehend unauffällige Vertiefung.

Ein erfindungsgemäß ausgeführter Reifen ist konstruktiv derart ausgelegt, dass sich die schulterseitig gelegenen Wingprofile 10 bei der Vulkanisation des Reifens in der Vulkanisationsform im Bereich des Segmentringes befinden. Das Wingprofil 10 überlappt dabei außenseitig einerseits den Laufstreifen 1 und andererseits den einen radial äußeren und Richtung Laufstreifen 1 dünner werdenden und zum Gürtelverband 7 auslaufenden Endabschnitt 6a des Seitenwandprofils 6. An der Reifenaußenseite befindet sich die Grenze 12 - die in Kreisform den Reifen umläuft - zwischen dem Wingprofil 10 und dem Seitenwandprofil 6, von der Basislinie B_{L} aus in einer Höhe h₂, die mindestens 75 % der Querschnittshöhe H des Reifens beträgt. Die Grenze 12 befindet sich ferner höchstens in der Höhe h₃ der seitlichen Randkante der radial innersten Gürtellage 7b.

Zumindest zwischen einer Höhe h₁ von 29 % der nominellen Seitenwandhöhe und dem Wingprofil 10 bzw. der Grenze 12 ist das Seitenwandprofil 6 der einzige, außenseitig der Radialkarkasse 8 verlaufende Gummibauteil. In diesem Bereich beträgt die an jeder Stelle senkrecht zum Verlauf der Radialkarkasse 8 ermittelte Dicke d des Seitenwandprofils 6 1,0 mm bis 3,5 mm, insbesondere bis zu 2,5 mm. Vorzugsweise ist die Dicke d mindestens 1,5 mm und insbesondere maximal 1,8 mm. Die Dicke d des Seitenwandprofils 6 ist in diesem Bereich weitgehend konstant, kann jedoch auch geringfügig, insbesondere um bis zu 0,2 mm, variieren. In den mit dem Hornprofil 5 und dem Wingprofil 10 überlappenden Endabschnitten 6a, 6b des Seitenwandprofils 6 nimmt die Dicke d im Wesentlichen kontinuierlich ab.

Bei erfindungsgemäß ausgeführten Reifen wird daher der Gummianteil in den Seitenwandbereichen bis weit in die Schulterbereiche hinein durch die mit geringer Dicke ausführbaren Seitenwandprofile 6 bestimmt. Dadurch werden etwaige Zugspannungen speziell in den Schulterbereichen reduziert, was vor allem bei sogenannten "Ultra High Performance"-Reifen, welche eine nominelle Seitenwandhöhe von höchstens 105 mm aufweisen, für die Reifenhaltbarkeit von Vorteil ist. Durch eine geringe Dicke der Seitenwandprofile 6 ist ferner der Anteil an Gummi, welcher beim Einfedern des Reifens während des Abrollen Zug- oder Druckbelastungen ausgesetzt ist, gegenüber herkömmlichen Konstruktionen geringer. Dadurch entsteht in den Seitenwänden weniger Energieverlust durch Wärme, was für einen geringen Rollwiderstand des Reifens besonders günstig ist. Eine dünnere Seitenwandgummierung trägt ferner zu einer Verringerung des Reifengeräusches im Fahrzeuginneren bei und verbessert die Geschwindigkeitsperformance des Reifens.

### Bezugsziffernliste

- 1: Laufstreifen
- 2: Wulstbereich
- 3: Wulstkern
- 4: Apex
- 5: Hornprofil
- 6: Seitenwand
- 6a, 6b: Endabschnitt
- 7: Gürtelverband
- 7a, 7b: Gürtellage
- 8: Radialkarkasse
- 8a: Abschnitt
- 9: Innenschicht
- 10: Wingprofil
- 11: Formtrennlinie
- 12: Grenze
- B_{L}: Basislinie
- d: Dicke
- H: Querschnittshöhe
- h₁, h₂, h₃: Höhe

## Patentansprüche

1. Fahrzeugluftreifen, welcher in einer Vulkanisationsform mit einem Segmentring und zwei Seitenwandschalen vulkanisiert worden ist, deren Formgrenzen an oder in den Schulterbereichen sichtbare Grenzstellen (11) hinterlassen, und welcher einen Laufstreifen (1), Seitenwandprofile (6), einen mehrlagigen Gürtelverband (7), eine Radialkarkasse (8), welche Wulstkerne (3) in Wulstbereichen (2) von axial innen nach axial außen umläuft, und ferner je ein Hornprofil (5) in jedem Wulstbereich (2) aufweist, welches außenseitig von einem radial inneren, Richtung Wulstkern (3) verjüngend auslaufenden Endabschnitt (6b) des Seitenwandprofils (6) überlappt ist, wobei in jedem Schulterbereich ein Wingprofil (10) verläuft, welches einen radial äußeren, Richtung Laufstreifen (1) verjüngend auslaufenden Endabschnitt (6a) des Seitenwandprofils (6) von außen überlappt,
**dadurch gekennzeichnet,**
**dass** sich die Wingprofile (10) radial außerhalb der von den Formgrenzen zwischen dem Segmentring und den Seitenwandschalen hinterlassenen Grenzstellen (11) befinden.

2. Fahrzeugluftreifen nach Anspruch 1, **dadurch gekennzeichnet, dass** jedes Wingprofil (10) eine an der Reifenaußenseite befindliche Grenze (12) zum Seitenwandprofil (6) aufweist, welche sich in einem in radialer Richtung ermittelten Abstand von einer Basislinie (B_{L}) befindet, welcher zumindest 75 % der ebenfalls von der Basislinie (B_{L}) ermittelten Querschnittshöhe (H) des Reifens beträgt, wobei die Basislinie (B_{L}) in axialer Richtung verläuft und jene Linie ist, welche an einer der jeweiligen Reifendimension entsprechenden Standardfelge das äußere Ende des Felgenradius berührt.

3. Fahrzeugluftreifen nach Anspruch 2, **dadurch gekennzeichnet, dass** sich die Grenze (12) zwischen den Wingprofilen (10) und den Seitenwandprofilen (6) höchstens auf Höhe der seitlichen Randkanten der radial innersten Gürtellage (7b) befindet.

4. Fahrzeugluftreifen nach einem der Ansprüche 1 bis 3, **dadurch gekennzeichnet, dass** die Seitenwandprofile (6) zumindest zwischen einer Höhe (h₁) von 29 % der nominellen Seitenwandhöhe und der Grenze (12) die einzigen, außenseitig der Radialkarkasse (8) verlaufenden Gummibauteile sind.

5. Fahrzeugluftreifen nach einem der Ansprüche 1 bis 4, **dadurch gekennzeichnet, dass** die senkrecht zum Verlauf der Radialkarkasse (8) vorliegende Dicke (d) der Seitenwandprofile (6) zwischen der Höhe (h₁) von 29 % der nominellen Seitenwandhöhe und der Grenze (12) 1,0 mm bis 3,5 mm, insbesondere bis 2,5 mm, beträgt.

6. Fahrzeugluftreifen nach Anspruch 5, **dadurch gekennzeichnet, dass** die senkrecht zum Verlauf der Radialkarkasse (8) vorliegende Dicke (d) der Seitenwandprofile (6) mindestens 1,5 mm beträgt.

7. Fahrzeugluftreifen nach Anspruch 5 oder 6, **dadurch gekennzeichnet, dass** die senkrecht zum Verlauf der Radialkarkasse (8) vorliegende Dicke (d) der Seitenwandprofile (6) höchstens 1,8 mm beträgt.

8. Fahrzeugluftreifen nach einem der Ansprüche 1 bis 7, **dadurch gekennzeichnet, dass** die senkrecht zum Verlauf der Radialkarkasse (8) vorliegende Dicke (d) der Seitenwandprofile (6) zwischen der Höhe (h₁) von 29 % der nominellen Seitenwandhöhe und der Grenze (12) zumindest im Wesentlichen konstant ist.

9. Fahrzeugluftreifen nach einem der Ansprüche 1 bis 8, **dadurch gekennzeichnet, dass** die Radialkarkasse (8) mit ihren um die Wulstkerne umgeschlagenen Abschnitten (8a) bis unter den Gürtelverband (7) reichend rückgeführt ist.

10. Fahrzeugluftreifen nach einem der Ansprüche 1 bis 8, **dadurch gekennzeichnet, dass** die um die Wulstkerne umgeschlagenen Abschnitte der Radialkarkasse im Bereich der Seitenwände als Hochschläge enden.

## Claims

1. Pneumatic vehicle tyre, which has been vulcanized in a vulcanizing mould with a segment ring and two sidewall shells, the mould borders of which leave visible border marks (11) behind on or in the shoulder regions, and which has a tread (1), sidewall profiles (6), a multi-ply breaker belt assembly (7), a radial carcass (8), which, from axially inside to axially outside, extends around bead cores (3) in bead regions (2), and also has in each bead region (2) a flange profile (5), which is overlapped on the outside by a radially inner end portion (6b) of the sidewall profile (6) that runs out in a tapering manner in the direction of the bead core (3), wherein in each shoulder region there extends a wing profile (10), which overlaps from the outside a radially outer end portion (6a) of the sidewall profile (6) that runs out in a tapering manner in the direction of the tread (1), **characterized**
**in that** the wing profiles (10) are located radially outside the border marks (11) left behind by the mould borders between the segment ring and the sidewall shells.

2. Pneumatic vehicle tyre according to Claim 1, **characterized in that** each wing profile (10) has in relation to the sidewall profile (6) a border (12), which is on the outer side of the tyre and is located at a distance, determined in the radial direction, from a baseline (B_{L}) that is at least 75% of the cross-sectional height (H) of the tyre likewise determined from the baseline (B_{L}), wherein the baseline (B_{L}) extends in the axial direction and is that line which, on a standard rim corresponding to the respective size of tyre, touches the outer end of the rim radius.

3. Pneumatic vehicle tyre according to Claim 2, **characterized in that** the border (12) between the wing profiles (10) and the sidewall profiles (6) is at most at the height of the lateral peripheral edges of the radially innermost belt ply (7b).

4. Pneumatic vehicle tyre according to one of Claims 1 to 3, **characterized in that** the sidewall profiles (6) are the only rubber components extending on the outside of the radial carcass (8), at least between a height (h₁) of 29% of the nominal sidewall height and the border (12).

5. Pneumatic vehicle tyre according to one of Claims 1 to 4, **characterized in that** the thickness (d) of the sidewall profiles (6) perpendicularly to the extent of the radial carcass (8) between the height (h₁) of 29% of the nominal sidewall height and the border (12) is 1.0 mm to 3.5 mm, in particular up to 2.5 mm.

6. Pneumatic vehicle tyre according to Claim 5, **characterized in that** the thickness (d) of the sidewall profiles (6) perpendicularly to the extent of the radial carcass (8) is at least 1.5 mm.

7. Pneumatic vehicle tyre according to Claim 5 or 6, **characterized in that** the thickness (d) of the sidewall profiles (6) perpendicularly to the extent of the radial carcass (8) is at most 1.8 mm.

8. Pneumatic vehicle tyre according to one of Claims 1 to 7, **characterized in that** the thickness (d) of the sidewall profiles (6) perpendicularly to the extent of the radial carcass (8) between the height (h₁) of 29% of the nominal sidewall height and the border (12) is at least substantially constant.

9. Pneumatic vehicle tyre according to one of Claims 1 to 8, **characterized in that** the radial carcass (8) is taken back with its portions (8a) that are wrapped around the bead cores to reach under the breaker belt assembly (7).

10. Pneumatic vehicle tyre according to one of Claims 1 to 8, **characterized in that** the portions of the radial carcass that are wrapped around the bead cores end in the region of the sidewalls as turn-ups.

## Revendications

1. Pneumatique de véhicule, qui a été vulcanisé dans un moule de vulcanisation avec un anneau segmenté et deux coquilles de paroi latérale, dont les limites du moule laissent des marques de limite (11) visibles sur ou dans les zones d'épaulement, et qui présente une bande de roulement (1), des profils de paroi latérale (6), une nappe de ceinture à plusieurs couches (7), une carcasse radiale (8), qui enveloppe des noyaux de talon (3) dans des régions de talon (2) du côté axialement intérieur vers le côté axialement extérieur, et en outre chaque fois une corne profilée (5) dans chaque région de talon (2), qui est recouverte sur le côté extérieur par une partie d'extrémité radialement intérieure (6b) du profil de paroi latérale (6) qui s'amincit en direction du noyau de talon (3), dans lequel un profilé d'aile (10) s'étend dans chaque région d'épaulement et recouvre une partie d'extrémité radialement extérieure (6a) du profil de paroi latérale (6) qui s'amincit en direction de la bande de roulement (1), **caractérisé en ce que** les profilés d'aile (10) se trouvent radialement à l'extérieur des marques de limite (11) laissées par les limites du moule entre l'anneau segmenté et les coquilles de paroi latérale.

2. Pneumatique de véhicule selon la revendication 1, **caractérisé en ce que** chaque profilé d'aile (10) présente une limite (12) vers le profil de paroi latérale (6) qui se trouve sur le côté extérieur du pneumatique, et qui se trouve à une distance déterminée en direction radiale à partir d'une ligne de base (B_{L}) qui vaut au moins 75 % de la hauteur (H) de la section transversale du pneumatique également déterminée à partir de la ligne de base (B_{L}), dans lequel la ligne de base (B_{L}) s'étend en direction axiale et est la ligne qui touche l'extrémité extérieure du rayon de jante sur une jante standard correspondant à la dimension de pneumatique respective.

3. Pneumatique de véhicule selon la revendication 2, **caractérisé en ce que** la limite (12) entre les profilés d'aile (10) et les profils de paroi latérale (6) se trouve au maximum à hauteur des bords latéraux de la couche de ceinture le plus intérieure (7b).

4. Pneumatique de véhicule selon l'une quelconque des revendications 1 à 3, **caractérisé en ce que** les profils de paroi latérale (6) sont les seules parties de gomme s'étendant sur le côté extérieur de la carcasse radiale (8) entre une hauteur (h₁) de 29 % de la hauteur nominale de la paroi latérale et la limite (12).

5. Pneumatique de véhicule selon l'une quelconque des revendications 1 à 4, **caractérisé en ce que** l'épaisseur (d) des profils de paroi latérale (6) qui est présente perpendiculairement à l'allure de la carcasse radiale (8) entre la hauteur (h₁) de 29 % de la hauteur nominale de la paroi latérale et la limite (12) vaut 1,0 mm à 3,5 mm, en particulier jusque 2,5 mm.

6. Pneumatique de véhicule selon la revendication 5, **caractérisé en ce que** l'épaisseur (d) des profils de paroi latérale (6) qui est présente perpendiculairement à l'allure de la carcasse radiale (8) vaut au moins 1,5 mm.

7. Pneumatique de véhicule selon la revendication 5 ou 6, **caractérisé en ce que** l'épaisseur (d) des profils de paroi transversale (6) qui est présente perpendiculairement à l'allure de la carcasse radiale (8) vaut au plus 1,8 mm.

8. Pneumatique de véhicule selon l'une quelconque des revendications 1 à 7, **caractérisé en ce que** l'épaisseur (d) des profils de paroi latérale (6) qui est présente perpendiculairement à l'allure de la carcasse radiale (8) entre la hauteur (h₁) de 29 % de la hauteur nominale de la paroi latérale et la limite (12) est au moins essentiellement constante.

9. Pneumatique de véhicule selon l'une quelconque des revendications 1 à 8, **caractérisé en ce que** la carcasse radiale (8) est ramenée avec ses parties (8a) relevées autour des noyaux de talon jusqu'en dessous du composite de ceinture (7).

10. Pneumatique de véhicule selon l'une quelconque des revendications 1 à 8, **caractérisé en ce que** les parties de la carcasse radiale relevées autour des noyaux de talon se terminent dans la région des parois latérales sous forme de plis montants.
